# FASCICULE DE BREVET EUROPEEN

(11) **EP 1 975 348 B1**
(45) Date de publication et mention de la délivrance du brevet: **25.02.2015**
(21) Numéro de dépôt: 08152766.5
(22) Date de dépôt: 14.03.2008
(51) Int. Cl.: E05B 85/10, E05B 17/10, B60Q 1/26

(54) **Poignée éclairante pour véhicule automobile**
Beleuchteter Türgriff für Kraftfahrzeug
Lighting handle for an automobile

(30) Priorité: 16.03.2007 FR 0701940
(43) Date de publication de la demande: 01.10.2008
(73) Titulaire: U-Shin France SAS, 94046 Créteil Cedex (FR)
(72) Inventeur: AUBRY, Anthony, 94042, CRETEIL CEDEX (FR)
(74) Mandataire: Huisman, Aurélien

(56) Documents cités:
- EP-A- 1 060 948
- DE-A1- 19 822 733
- DE-A1- 19 947 752
- US-A1- 2007 195 542

## Description

L'invention concerne une poignée extérieure d'ouvrant de véhicule automobile, comportant un système d'éclairage, destiné à éclairer le sol à proximité de l'ouvrant. L'éclairage du sol à proximité de l'ouvrant est utile pour signaler, dans des conditions d'obscurité, aux usagers du véhicule (conducteur, passagers) un sol en mauvais état avant qu'ils n'y posent les pieds.

On connaît dans l'état de la technique des dispositifs d'éclairage du sol intégrés dans une poignée et notamment les documents EP 1 060 948, DE 198 22 733 divulguent une poignée. Dans ces dispositifs d'éclairage, une source d'émission de rayons lumineux éclaire directement le sol.

Ces différents agencements présentent les inconvénients suivants :
- la zone d'émission de lumière n'est pas toujours protégée efficacement contre les intempéries (projection de boues, neige...), entraînant une obstruction partielle ou totale de celle-ci et réduisant ainsi considérablement les performances de l'éclairage au sol ;
- la zone d'émission de lumière n'est pas toujours cachée, et du fait qu'il est nécessaire d'utiliser une source relativement puissante pour éclairer le sol efficacement, cette zone devient visible à distance, et donne à l'ensemble un aspect peu esthétique avec la présence d'un point lumineux ;
- du fait du manque de place disponible sur la poignée, le choix d'une zone d'émission de lumière permettant d'éclairer le sol directement n'est pas toujours possible.

L'invention vise donc à proposer une poignée perfectionnée éclairant le sol et qui permet de s'affranchir au moins partiellement des inconvénients précités.

A cet effet l'invention propose une poignée destinée à être montée sur un panneau extérieur de carrosserie d'un ouvrant de véhicule automobile comportant, un élément de préhension pouvant être monté sur le panneau extérieur, et un module d'éclairage destiné à éclairer le sol et muni d'au moins une source d'émission de rayons lumineux, caractérisée en ce que le module d'éclairage comporte en outre au moins un réflecteur agencé en vis-à-vis de ladite source d'émission de rayons lumineux, de manière à ce que, en position de montage, les rayons lumineux traversent l'espace délimité par l'élément de préhension et le panneau extérieur et, sont réfléchis par le réflecteur en direction du sol.

D'autres caractéristiques et avantages de l'invention apparaîtront à la lecture de la description détaillée qui suit et des figures sur lesquelles :
- la figure 1 représente une vue partielle en perspective d'un véhicule automobile équipée d'une poignée conforme à l'invention;
- la figure 2 est une vue schématique en coupe transversale selon le plan (Y, Z) d'une poignée conforme à l'invention du type « palette » ;
- la figure 3 est une vue identique à la figure 2, selon une variante;
- la figure 4 est une vue schématique en coupe transversale selon le plan (X, Y) d'une poignée conforme à l'invention du type « frigo » ;
- la figure 5 est une vue schématique en coupe transversale selon le plan (Y,Z) d'une poignée conforme à l'invention du type « frigo » ;
- la figure 6 est une vue identique à la figure 5, selon une première variante; et
- la figure 7 est une vue identique à la figure 4, selon une deuxième variante.

Sur toutes ces figures, des références identiques désignent des éléments identiques.

De plus, on définit un repère selon lequel l'axe X correspond au sens de déplacement d'un véhicule, l'axe Y est l'axe traversant le véhicule d'un côté à l'autre, et l'axe Z est l'axe vertical.

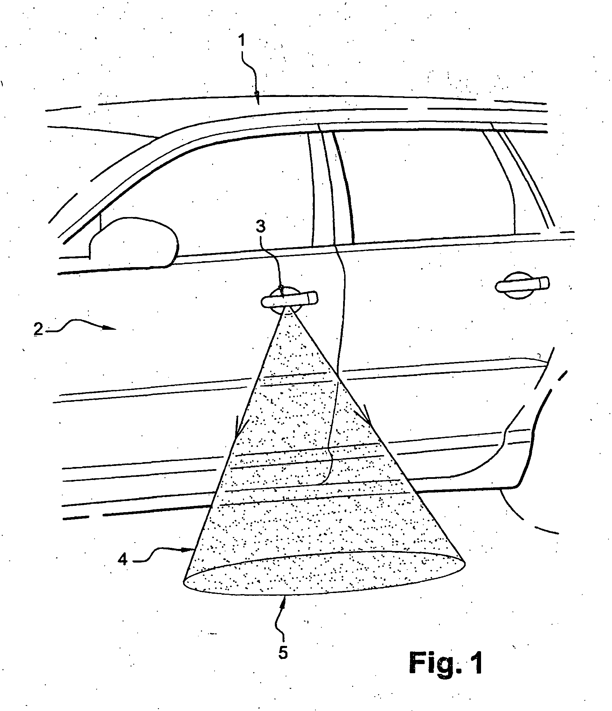

La figure 1, représente une vue partielle, d'un véhicule automobile 1 ayant un ouvrant 2, sur lequel est disposé une poignée 3. Comme cela est détaillé dans les figures suivantes 2 à 7, la poignée 3 est équipée d'un module d'éclairage émettant des rayons lumineux 4 en direction du sol. De préférence, la tâche 5 formée sur le sol par les rayons lumineux 4, a une taille prédéfinie, et se situe à proximité de l'ouvrant 2 en s'étendant jusqu'à une distance d'environ un mètre.

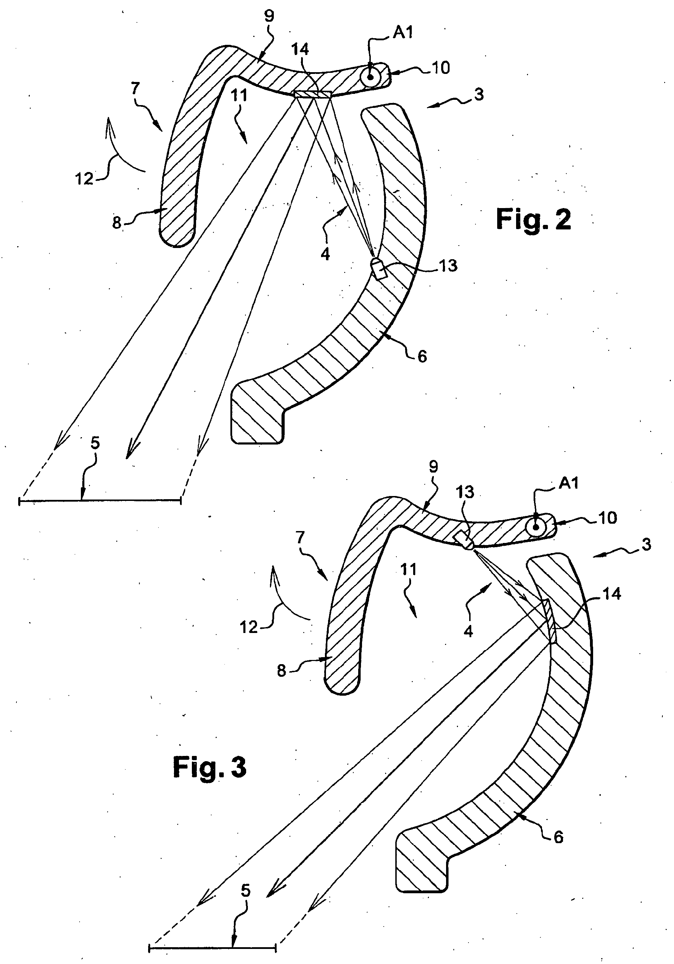

Dans un premier exemple de réalisation illustré figure 2, on a représenté en coupe transversale selon (Y, Z), une poignée de type « palette », c'est-à-dire, une poignée 3, comportant d'une part un support 6 en forme de bol et d'autre part un élément de préhension 7.

L'élément de préhension 7 est réalise sous la forme de deux pans, un premier pan 8, sensiblement verticale et parallèle au plan de l'ouvrant, et un deuxième pan 9, sensiblement horizontale et parallèle au sol. L'élément de préhension 7 est articulé sur le support 6, au niveau de l'extrémité 10 du pan horizontale 9, et selon un axe A1 sensiblement parallèle à X. L'élément de préhension 7 recouvre partiellement le support 6, définissant ainsi un espace intérieur de préhension 11, dans lequel pourra s'engager une main désirant faire pivoter l'élément de préhension 7, autour de l'axe A1 et dans le sens de la flèche 12.

Comme on peut le voir sur la figure 2, une source d'émission 13, ici une diode électroluminescente, agencé au niveau du support 6, émet des rayons lumineux 4 en direction d'un réflecteur 14, ici un miroir à surface de réflexion plane, disposé sur la face intérieur du pan horizontal 9 de l'élément de préhension 7. La diode électroluminescente 13 émet les rayons 4 vers le haut en biais, et le miroir plan 14 réfléchi les rayons 4 vers le bas en biais. Ainsi, les rayons 4 émis par diode électroluminescente 13, traversent tout d'abord l'espace intérieur 11, puis sont réfléchis par le miroir plan 14 en direction du sol pour former une tâche 5 sur le sol de dimensions prédéfinies s'étendant jusqu'à environ un mètre de l'ouvrant.

En variante, le réflecteur 14 peut être un miroir à surface de réflexion courbe, concave ou convexe.

Avantageusement le réflecteur 14 peut être formé par une portion métallisée de l'élément de préhension 7.

On peut également envisager que le réflecteur 14 comprenne un miroir fixé sur un support orientable par un élément électromécanique de type piézoélectrique.

Selon une variante non représentée, la source d'émission 13 peut comporter un guide de lumière, à l'entrée duquel est disposé une diode électroluminescente et dont la sortie est agencé en vis-à-vis du réflecteur 14.

Bien entendu, toutes les variantes indiquées par rapport au mode de réalisation de la figure 2, que ce soit pour la source d'émission 13 ou pour le réflecteur 14, pourront s'appliquer de la même manière à tous les modes de réalisations décrits par la suite dans les figures 3 à 7.

La figure 3 décrit un mode de réalisation identique à celui de la figure 2, mais qui se distingue par le fait que la diode électroluminescente 13 est agencée sur l'élément de préhension 7, au niveau du pan horizontal 9, et le miroir plan 14 est disposé au niveau du support 6.

La source d'émission 13 émet les rayons 4 vers le bas en biais, et le miroir plan réfléchi les rayons 4 vers le bas en biais. De la même manière que décrit précédemment, les rayons 4 émis par la source d'émission 13, traversent tout d'abord l'espace intérieur 11, puis sont réfléchis par le miroir 14 en direction du sol pour former une tâche 5 sur le sol de dimensions prédéfinies s'étendant jusqu'à environ un mètre de l'ouvrant.

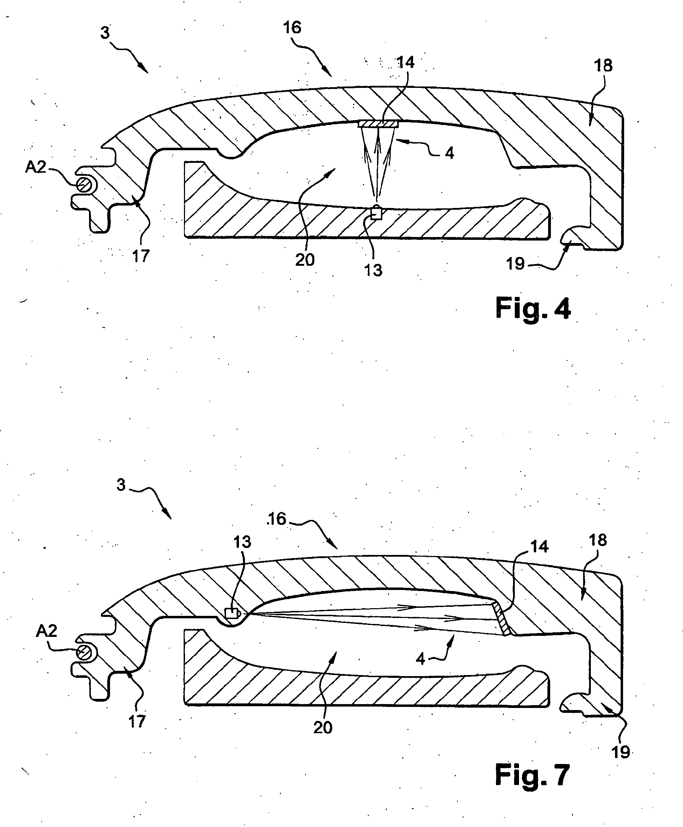

Les figures 4 à 7 illustrent un autre mode de réalisation et ses variantes, dans lesquelles la poignée 3 de type « palette » a été remplacée par une poignée 3 de type « frigo », c'est-à-dire une poignée à levier pivotant.

Comme illustré sur la figure 4, la poignée 3 de type « frigo » comporte d'une part un support 15 en forme de bol, et d'autre part un levier de préhension 16. Le levier de préhension 16 est articulé sur le support 15 par une extrémité avant 17 autour d'un axe A2 parallèle à l'axe Z. L'extrémité arrière 18 du levier de préhension 16 comporte un pied 19 qui s'étend transversalement de manière à coopérer avec une tringlerie non représenté ici. Un espace intérieur de préhension 20, définit l'espace dans lequel pourra s'engager une main désirant agir sur le levier de préhension 16.

Comme on peut le voir sur la figure 4, une diode électroluminescente 13, agencé au niveau du support 15, émet des rayons lumineux 4 en direction d'un miroir à surface de réflexion plane 14, disposé sur le levier de préhension 16 en face de la diode électroluminescente 13.

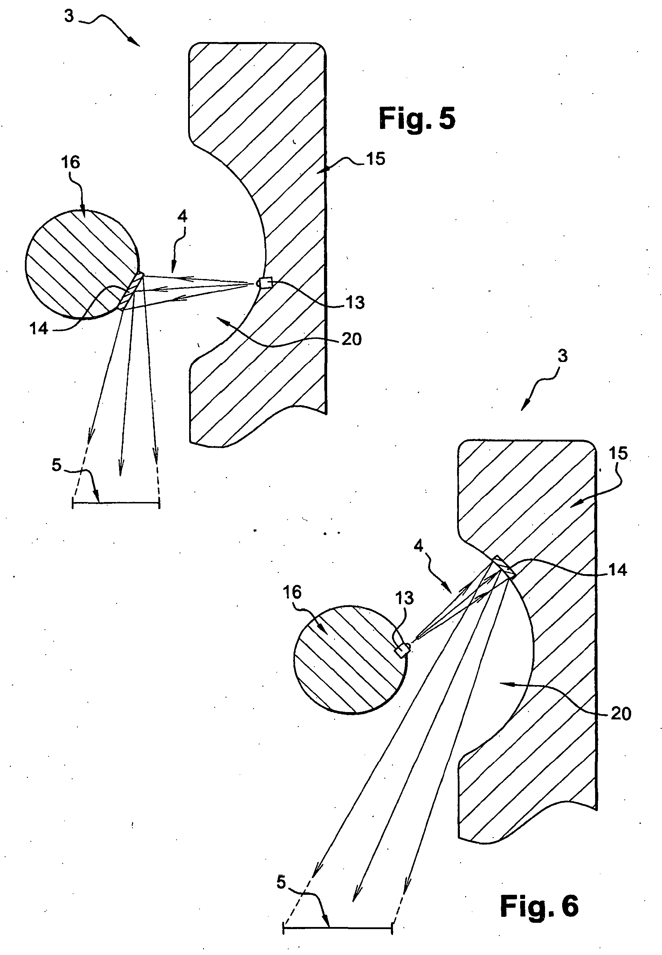

Sur la figure 5, on observe que la source d'émission émet les rayons 4, dans une direction sensiblement parallèle au plan du sol, et le miroir plan réfléchi les rayons 4 vers le bas dans une direction sensiblement perpendiculaire au plan du sol. Ainsi, les rayons 4 émis par la source d'émission 13, traversent tout d'abord l'espace intérieur 20, puis sont réfléchis par le miroir 14 en direction du sol pour former une tâche 5 sur le sol de dimensions prédéfinies s'étendant jusqu'à environ un mètre de l'ouvrant.

La figure 6, décrit un mode de réalisation identique à celui de la figure 5, mais qui se distingue par une variante, dans laquelle la diode électroluminescente 13 est agencée sur l'élément de préhension 16, et le miroir plan 14 est disposé au niveau du support 15.

La source d'émission 13 émet les rayons 4 vers le haut en biais, et le miroir plan réfléchi les rayons 4 vers le bas en biais. De la même manière que décrit précédemment, les rayons 4 émis par diode électroluminescente 13, traversent tout d'abord l'espace intérieur 20, puis sont réfléchis par le miroir 14 en direction du sol pour former une tâche 5 sur le sol de dimensions prédéfinies s'étendant jusqu'à environ un mètre de l'ouvrant.

Avantageusement enfin, la figure 7 décrit un mode de réalisation identique à celui de la figure 5, mais qui se distingue par une variante, dans laquelle la diode électroluminescente 13 et le miroir plan 14 sont agencées sur l'élément de préhension 16.

Sur la figure 7, on observe que la source d'émission émet les rayons 4, dans une direction sensiblement parallèle au plan du sol, et le miroir plan réfléchi les rayons 4 vers le bas dans une direction sensiblement perpendiculaire au plan du sol. Ainsi, les rayons 4 émis par la source d'émission 13, traversent tout d'abord l'espace intérieur 20, puis sont réfléchis par le miroir 14 en direction du sol pour former une tâche, non représentée ici, de dimensions prédéfinies s'étendant jusqu'à environ un mètre de l'ouvrant.

Comme cela est déjà connu pour l'homme du métier, chaque fois que nécessaire pour un des mode de réalisation, lorsque le support est disposé sur la face interne (côté intérieur véhicule) du panneau extérieur de l'ouvrant, une fenêtre transparente est aménagée dans le panneau extérieur devant la source d'émission afin de laisser passer les rayons lumineux.

Enfin, la mise en route du système d'éclairage du sol n'étant nécessaire que lorsqu'une presonne autorisée s'approche du véhicule, il est envisagé que le déclenchement se fasse soit par la détection de l'approche d'un individu muni d'un identifiant autorisé, soit par l'activation d'un switch sur le dispositif, de télécommande à distance, d'ouverture/fermeture du véhicule.

## Revendications

1. Poignée (3), destinée à être montée sur un panneau extérieur de carrosserie d'un ouvrant (2) de véhicule automobile (1) comportant, un élément de préhension (7, 16) pouvant être monté sur le panneau extérieur et, un module d'éclairage destiné à éclairer le sol et muni d'au moins une source d'émission (13) de rayons lumineux (4), **caractérisée en ce que** le module d'éclairage comporte en outre au moins un réflecteur (14) agencé en vis-à-vis de ladite source d'émission (13) de rayons lumineux (4), de manière à ce que, en position de montage, les rayons lumineux (4) traversent l'espace (11, 20), délimité par l'élément de préhension (7, 16) et le panneau extérieur, et sont réfléchis par le réflecteur (14) en direction du sol.

2. Poignée selon la revendication 1, **caractérisée en ce que** le réflecteur (14) est un miroir.

3. Poignée selon la revendication 2, **caractérisée en ce que** le miroir (14) possède une surface de réflexion plane pour former une tâche (5) de dimensions prédéfinies sur le sol.

4. Poignée selon la revendication 2, **caractérisée en ce que** le miroir (14) possède une surface de réflexion courbe, pour former une tâche (5) de dimensions prédéfinies sur le sol.

5. Poignée selon la revendication 4, **caractérisée en ce que** la surface de réflexion courbe est de forme concave.

6. Poignée selon la revendication 4, **caractérisée en ce que** la surface de réflexion courbe est de forme convexe.

7. Poignée selon l'une des revendications 2 à 6, **caractérisée en ce que** le miroir (14) est formé par une portion métallisée de l'élément de préhension (7, 16) de la poignée (3).

8. Poignée selon l'une des revendications 2 à 6, **caractérisée en ce que** le miroir (14) est orientable par un élément électromécanique, en particulier par un élément de type piézoélectrique.

9. Poignée selon l'une quelconque des revendications précédentes, **caractérisée en ce que** la source d'émission (13) de rayons lumineux (4) comprend au moins une diode électroluminescente.

10. Poignée selon la revendication 9, **caractérisée en ce que** la source d'émission (13) des rayons lumineux comprend en outre un guide lumière, à l'entrée duquel est disposé ladite diode électroluminescente, et dont la sortie est agencée en vis-à-vis du réflecteur (14).

11. Poignée selon l'une quelconques des revendications 1 à 10, **caractérisée en ce que** la source d'émission (13) de rayons lumineux (4) et le réflecteur (14), sont disposés sur l'élément de préhension (7, 16) de la poignée (3).

## Patentansprüche

1. Griff (3), der dazu bestimmt ist, auf ein äußeres Karosseriepaneel einer Tür (2) eines Kraftfahrzeugs (1) montiert zu werden, ein Greifelement (7, 16) umfassend, das auf dem äußeren Paneel montiert werden kann, sowie ein Beleuchtungsmodul, das dazu bestimmt ist, den Boden zu beleuchten und mit zumindest einer Emissionsquelle (13) von Lichtstrahlen ausgestattet ist, **dadurch gekennzeichnet, dass** das Beleuchtungsmodul darüber hinaus zumindest einen Reflektor (14) umfasst, der gegenüber der besagten Emissionsquelle (13) von Lichtstrahlen (4) angeordnet ist, sodass die Lichtstrahlen (4) in der Montagestellung den Raum (11, 20) durchqueren, der durch das Greifelement (7, 16) und das äußere Paneel eingegrenzt wird, und durch den Reflektor (14) in Richtung des Bodens reflektiert werden.

2. Griff nach Anspruch 1, **dadurch gekennzeichnet, dass** der Reflektor (14) ein Spiegel ist.

3. Griff nach Anspruch 2, **dadurch gekennzeichnet, dass** der Spiegel (14) eine ebene Reflexionsfläche besitzt, um auf dem Boden einen Lichtfleck (5) in vorbestimmten Abmessungen zu bilden.

4. Griff nach Anspruch 2, **dadurch gekennzeichnet, dass** der Spiegel (14) eine gekrümmte Reflexionsfläche besitzt, um auf dem Boden einen Lichtfleck (5) in vorbestimmten Abmessungen zu bilden.

5. Griff nach Anspruch 4, **dadurch gekennzeichnet, dass** die gekrümmte Reflexionsfläche eine konkave Form aufweist.

6. Griff nach Anspruch 4, **dadurch gekennzeichnet, dass** die gekrümmte Reflexionsfläche eine konvexe Form aufweist.

7. Griff nach einem der Ansprüche 2 bis 6, **dadurch gekennzeichnet, dass** der Spiegel (14) durch einen metallisierten Abschnitt des Greifelements (7, 16) des Griffs (3) gebildet wird.

8. Griff nach einem der Ansprüche 2 bis 6, **dadurch gekennzeichnet, dass** der Spiegel (14) durch ein elektromechanisches Element, im Speziellen durch ein piezoelektrisches Element, verstellbar ist.

9. Griff nach irgendeinem der vorherigen Ansprüche, **dadurch gekennzeichnet, dass** die Emissionsquelle (13) von Lichtstrahlen (4) zumindest eine Lumineszenz-Diode umfasst.

10. Griff nach Anspruch 9, **dadurch gekennzeichnet, dass** die Emissionsquelle (13) von Lichtstrahlen darüber hinaus einen Lichtleiter umfasst, an dessen Eingang die besagte Lumineszenz-Diode angeordnet ist, und dessen Ausgang gegenüber dem Reflektor (14) angeordnet ist.

11. Griff nach irgendeinem der Ansprüche 1 bis 10, **dadurch gekennzeichnet, dass** die Emissionsquelle (13) von Lichtstrahlen (4) und der Reflektor (14) auf dem Greifelement (7, 16) des Griffs (3) angeordnet sind.

## Claims

1. Handle (3), intended to be mounted on an exterior bodywork panel of an opening element (2) of a motor vehicle (1) comprising, an element for gripping (7, 16) that can be mounted on the exterior panel and, a lighting module intended to illuminate the ground and provided with at least one source for emitting (13) light rays (4), **characterised in that** the lighting module further comprises at least one reflector (14) arranged opposite said source for emitting (13) light rays (4), in such a way that, in the position of mounting, the light rays (4) pass through the space (11, 20), delimited by the element for gripping (7, 16) and the exterior panel, and are reflected by the reflector (14) in the direction of the ground.

2. Handle according to claim 1, **characterised in that** the reflector (14) is a mirror.

3. Handle according to claim 2, **characterised in that** the mirror (14) has a flat reflection surface in order to form a spot (5) of predefined dimensions on the ground.

4. Handle according to claim 2, **characterised in that** the mirror (14) has a curved reflection surface, in order to form a spot (5) of predefined dimensions on the ground.

5. Handle according to claim 4, **characterised in that** the curved reflection surface is of concave shape.

6. Handle according to claim 4, **characterised in that** the curved reflection surface is of convex shape.

7. Handle according to one of claims 2 to 6, **characterised in that** the mirror (14) is formed by a metalized portion of the element for gripping (7, 16) the handle (3).

8. Handle according to one of claims 2 to 6, **characterised in that** the mirror (14) can be oriented by an electromechanical element, in particular by an element of the piezoelectric type.

9. Handle as claimed in any preceding claim, **characterised in that** the source for emitting (13) light rays (4) comprises at least one light-emitting diode.

10. Handle according to claim 9, **characterised in that** the source for emitting (13) light rays further comprises a light guide, at the entrance of which is arranged said light-emitting diode, and of which the output is arranged opposite the reflector (14).

11. Handle, according to any of claims 1 to 10, **characterised in that** the source for emitting (13) light rays (4) and the reflector (14), are arranged on the element for gripping (7, 16) the handle (3).
